# EUROPEAN PATENT APPLICATION

(11) **EP 1 700 754 A1**
(43) Date of publication of application: **13.09.2006**
(21) Application number: 06002875.0
(22) Date of filing: 13.02.2006
(51) Int. Cl.: B60R 21/16

(54) **Curtain airbag device**

(30) Priority: 11.03.2005 JP 2005069463
(71) Applicant: TAKATA CORPORATION, Minato-ku, Tokyo 106-8510 (JP)
(72) Inventor: Nakanishi, Ryosuke, Tokyo 106-8510 (JP)
(74) Representative: Vossius & Partner

(57) **Abstract**

A curtain airbag device having a simple-structured tension-applying mechanism with a small number of components is provided. A curtain airbag device 20 is disposed along a roof side-rail 11 and extends from an A pillar 10 of a vehicle to a C pillar 12. When the vehicle is involved in a side impact or rollover, a curtain airbag 21 is deployed as a result of gas being sent from an inflator 22, such that the curtain airbag 21 extending between the A pillar 10 and the C pillar 12 covers a B pillar 14 and windows 15a, 16a respectively provided in a front door 15 and a rear door 16. In order to apply tension to a lower edge of the curtain airbag 21 in the deployed state, a wire 30 defining a linear member is engaged to an opening 21c and extends substantially in the vertical direction. When the curtain airbag 21 is completely deployed, the wire 30 is stretched between the opening 21c and one of fastening members 25 and between the opening 21c and an anchor 31, whereby tension is applied to the lower edge of the curtain airbag 21 (Fig. 1).

## Description

The present invention relates to a curtain airbag device including a curtain airbag that can be deployed along an inner side surface of a vehicle cabin.

When a vehicle equipped with a curtain airbag device is involved in, for example, a side impact or rollover, curtain airbags are deployed downward along inner side surfaces (for example, doors and pillars) of the vehicle cabin so as to protect the head of each vehicle occupant and to keep each vehicle occupant inside the vehicle cabin.

Fig. 4 illustrates a mechanism disclosed in JP-A-2003-81048 (Patent Document 1), in which tension is applied along a lower edge of a curtain airbag deployed along an inner side surface of a vehicle cabin so that the lower edge of the curtain airbag is stretched in the front-back direction.

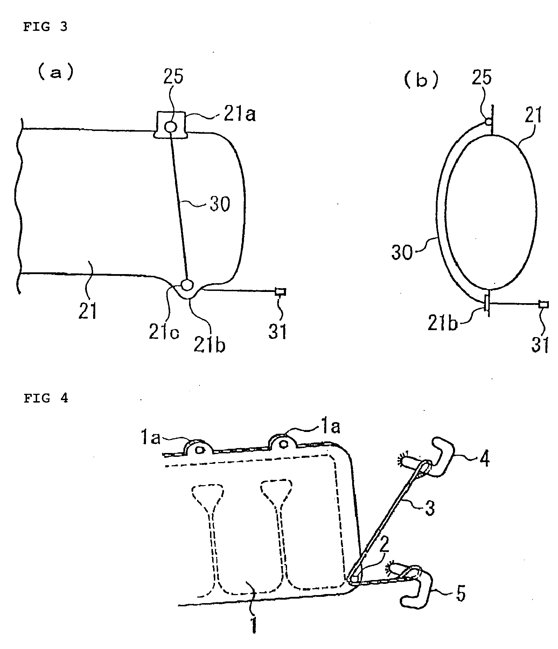

In Fig. 4, attachment tabs 1a provided on the upper edge of a curtain airbag 1 are fastened to a roof side-rail (not shown). When the curtain airbag 1 is in an undeployed state, the curtain airbag 1 is folded in an elongated configuration and is disposed along the roof side-rail.

In order to apply tension along the lower edge of the curtain airbag 1 in a deployed state, a wire 3 is provided so as to extend in the vertical direction. A lower rear portion of the curtain airbag 1 is provided with a pin 2, such that the wire 3 is supported by the pin 2. Upper and lower ends of the wire 3 are fastened to a C pillar respectively via pins 4, 5. When the curtain airbag 1 is deployed downward so as to reach the state shown in Fig. 4, the wire 3 is stretched between the pins 2, 3, 4, whereby tension is applied along the lower edge of the curtain airbag 1.

In the conventional structure shown in Fig. 4, since the wire 3 is engaged to the curtain airbag 1 via the pin 2, such a structure requires an excessive number of components due to the pin 2.

Accordingly, the object of the present invention is to provide a curtain airbag device having a simple-structured tension-applying mechanism with a less number of components.

A curtain airbag device according to the present invention includes a curtain airbag which is capable of being deployed downward along an inner side surface of a vehicle cabin; an inflator for supplying gas into the curtain airbag so as to deploy the curtain airbag; and a tension-applying member for applying tension to a lower edge of the curtain airbag in a deployed state. The tension-applying member is a linear member extending in a vertical direction. A lower front portion or a lower rear portion of the curtain airbag is provided with an opening through which the linear member extends.

In the present invention, an upper end of the linear member is preferably fastened to a vehicle body via a fastening member, the fastening member being provided for fastening the curtain airbag to the vehicle body.

According to the curtain airbag device of the present invention, since the linear member extends through the opening provided in the lower portion of the curtain airbag, a component equivalent to the pin 2 included in the conventional example shown in Fig. 4 is not necessary, thereby contributing to cost reduction.

In the present invention, the upper end of the linear member is fastened to the vehicle body via the fastening member, which is provided for fastening the curtain airbag to the vehicle body. Thus, the number of fastening members is reduced, thereby further contributing to cost reduction.

### [Best Mode for Carrying Out the Invention]

Embodiments of the present invention will now be described with reference to the drawings:
Fig. 1 includes perspective views illustrating the interior of a vehicle equipped with a curtain airbag device according to an embodiment, in which Fig. 1(a) illustrates an undeployed state of a curtain airbag, and Fig. 1(b) illustrates a deployed state of the curtain airbag;
Fig. 2(a) is an enlarged partial view of Fig. 1(a), and Fig. 2(b) is a side view of Fig. 2(a);
Fig. 3(a) is an enlarged partial view of Fig. 1(b), and Fig. 3(b) is a side view of Fig. 2(a); and
Fig. 4 is a schematic diagram of a conventional example.

A curtain airbag device 20 is disposed along a roof side-rail 11 and extends from an A pillar 10 of the vehicle to a C pillar 12. When the vehicle is involved in a side impact or a rollover, a curtain airbag 21 is deployed as a result of gas being sent from an inflator 22, such that the curtain airbag 21 extending between the A pillar 10 and the C pillar 12 covers a B pillar 14 and windows 15a, 16a respectively provided in a front door 15 and a rear door 16.

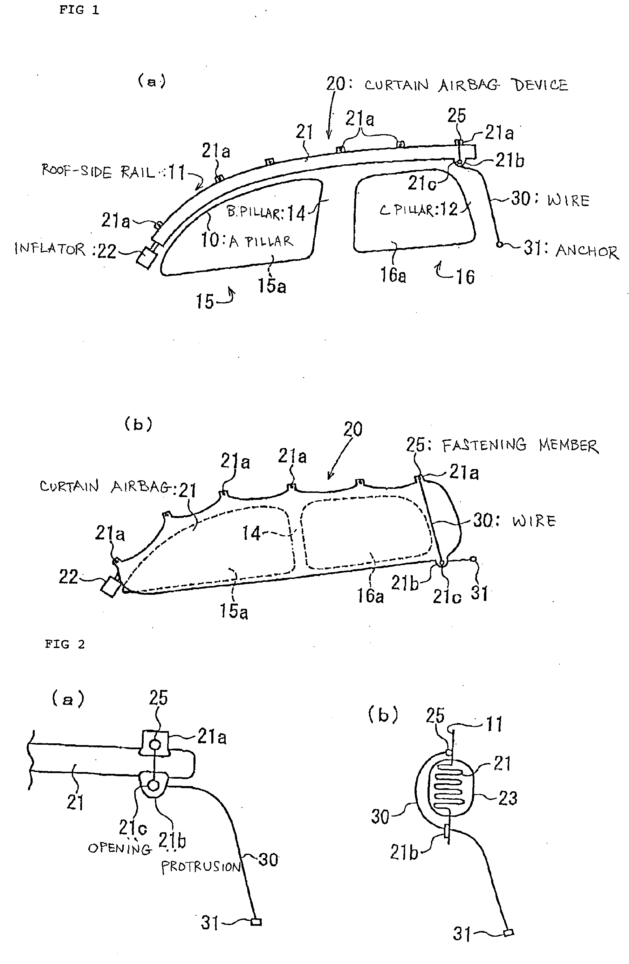

The curtain airbag 21 is folded in an elongated configuration and is disposed along the roof side-rail 11 while being kept in shape by a breakable tape 23 (Fig. 2(b)). The curtain airbag 21 is covered with a roof-head lining (not shown).

A plurality of tabs 21a protrudes from an upper edge of the curtain airbag 21. The tabs 21a are fastened to the A pillar 10 and the roof side-rail 11 with fastening members 25, such as bolts and rivets.

A lower rear portion of the curtain airbag 21 is provided with a protrusion 21b extending downward. The protrusion 21b is provided with an opening 21c.

In order to apply tension to a lower edge of the curtain airbag 21 in the deployed state, a wire 30 defining a linear member is engaged to the opening 21c and extends substantially in the vertical direction. In this embodiment, an upper end of the wire 30 is fastened to the roof side-rail 11 via one of the fastening members 25 disposed at the rearmost portion of the curtain airbag 21. On the other hand, a lower end of the wire 30 is fastened to the C pillar 12 via an anchor 31. The wire 30 has a length that is greater than the length of a straight line that connects the rearmost fastening member 25 and the anchor 31.

When a vehicle equipped with the curtain airbag device 20 is involved in a side impact or a rollover, the inflator 22 generates gas so as to start inflating the curtain airbag 21. Then, the curtain airbag 21 pushes open the lower edge of the roof-head lining. As a result, the curtain airbag 21 is deployed downward along the interior side of the windows 15a, 16a.

When the curtain airbag 21 is completely deployed, the wire 30 is stretched between the opening 21c and the fastening member 25 and between the opening 21c and the anchor 31, whereby tension is applied to the lower edge of the curtain airbag 21. In other words, since the anchor 31 is posterior to the protrusion 21b, the lower rear portion of the curtain airbag 21 is pulled towards the back via the wire 30, whereby tension is applied to the lower edge of the curtain airbag 21.

According to this embodiment, the wire 30 extending through the opening 21c provided in the curtain airbag 21 contributes to a less number of components as well as cost reduction. Furthermore, since the upper end of the wire 30 is fastened to the roof side-rail 11 via one of the airbag fastening members 25, the component costs can be reduced by standardizing the fastening members.

In this embodiment, when the curtain airbag 21 is being deployed to the state shown in Fig. 2(b) and Fig. 3(a), the wire 30 extends downward substantially in the vertical direction from the rearmost fastening member 25. Thus, the extending direction of the wire 30 and the deploying direction of the curtain airbag 21 are aligned with each other, whereby smooth downward deployment of the curtain airbag 21 is achieved.

Although the wire 30 is fastened to the C pillar 12 in the above-described embodiment, the wire 30 may alternatively be fastened to, for example, the B pillar or a D pillar depending on the size of the curtain airbag and the structure of the vehicle body. Furthermore, although the opening 21c is provided in the lower rear portion of the curtain airbag 21 in the above-described embodiment, the opening 21c may alternatively be provided in a lower front portion of the curtain airbag 21. In that case, the wire may be fastened to the A pillar.

Although a wire is used as the linear member in the above-described embodiment, the linear member may alternatively be defined by, for example, a rope, a belt, a tube, or a tape composed of a soft resin material.

## Claims

1. A curtain airbag device comprising:
a curtain airbag which is capable of being deployed downward along an inner side surface of a vehicle cabin;
an inflator for supplying gas into the curtain airbag so as to deploy the curtain airbag; and
a tension-applying member for applying tension to a lower edge of the curtain airbag in a deployed state,
wherein the tension-applying member is a linear member extending in a vertical direction,
wherein a lower front portion or a lower rear portion of the curtain airbag is provided with an opening through which the linear member extends.

2. The curtain airbag device according to Claim 1, wherein an upper end of the linear member is fastened to a vehicle body via a fastening member, the fastening member being provided for fastening the curtain airbag to the vehicle body.
